# EUROPÄISCHE PATENTSCHRIFT

(11) **EP 2 000 320 B1**
(45) Veröffentlichungstag und Bekanntmachung des Hinweises auf die Patenterteilung: **12.09.2012**
(21) Anmeldenummer: 07009361.2
(22) Anmeldetag: 10.05.2007
(51) Int. Cl.: B42D 15/00, B42D 15/10

(54) **Sicherheitselement**
Security element
Elément de sécurité

(43) Veröffentlichungstag der Anmeldung: 10.12.2008
(73) Patentinhaber: Hueck Folien Ges.m.b.H., 4342 Baumgartenberg (AT)
(72) Erfinder: Keplinger, Jürgen, Dr., 4351 Saxen (AT)
(74) Vertreter: Landgraf, Elvira

(56) Entgegenhaltungen:
- WO-A-01/89831
- WO-A-90/12694
- DE-A1- 2 163 943
- DE-A1-102005 028 162

## Beschreibung

Die Erfindung betrifft ein Sicherheitselement mit optisch aktiven Strukturen, wie Hologrammen, Oberflächenstrukturen, Beugungsgittern, Kinegrammen und dergleichen, das sehr hohe Beständigkeiten aufweist.

Ein Sicherheitselement mit einer optisch aktiven Struktur ist in DE 10 2005 028 162 A1 offenbart.

Sicherheitselemente mit optisch aktiven Strukturen werden als fälschungssichere Merkmale sowohl bei Wertdokumenten, Banknoten, Ausweisen und dergleichen, als auch zum Produktschutz eingesetzt.
Insbesondere der Einsatz auf Wertdokumenten und Banknoten stellt hohe Anforderungen an die Beständigkeit der Sicherheitsmerkmale unter mechanischer und chemischer Beanspruchung.
Die Sicherheitselemente müssen gegen Säuren und Laugen, gegen Lösungsmittel und Bleichmittel beständig sein, sowie eine Waschmaschinenbeständigkeit aufweisen um die geforderte Fälschungssicherheit zu gewährleisten. Die Sicherheitselemente sollten unter diesen Bedingungen nicht ausbleichen, da ansonsten die Möglichkeit eines Überdruckens mit höherem Wert besteht.

Aufgabe der Erfindung ist es, ein Sicherheitselement bereitzustellen, das die geforderten Beständigkeiten aufweist.

Gegenstand der Erfindung ist daher ein Sicherheitselement aufweisend ein Trägersubstrat, eine geprägte optisch aktive Struktur, eine reflektierende Schicht und eine Schicht, die ein Verkleben mit dem Substrat erlaubt, dadurch gekennzeichnet, dass die Schicht, die die Verklebung mit dem Substrat erlaubt, aus mehreren Schichten besteht, die vernetzt, teilvernetzt oder nicht vernetzt sein können und die untereinander in Wechselwirkung treten.

Als Trägersubstrat kommen beispielsweise flexible, halbstarre oder starre Trägerfolien oder Verbunde, vorzugsweise Kunststofffolien, beispielsweise aus PI, PP, OPP, PE, PPS, PEEK, PEK, PEI, PSU, PAEK, LCP, PEN, PBT, PET, PA, PC, COC, POM, ABS, PVC Fluorpolymere wie Teflon und dergleichen oder Verbunde zwischen unterschiedlichen oder gleichartigen Trägerfolien in Frage. Die Trägerfolien weisen vorzugsweise eine Dicke von 5 - 700 µm, bevorzugt 5 - 200 µm, besonders bevorzugt 5 - 75 µm auf.

Zur Herstellung der optisch aktiven Struktur wird das Trägersubstrat in einem Beschichtungsverfahren wie beispielsweise einem Siebdruck-, Tiefdruck- oder Flexodruckverfahren mit einem strahlungshärtbaren Lack beschichtet. Die Beschichtung kann selektiv oder vollflächig erfolgen.

Der strahlungshärtbare Lack kann beispielsweise ein strahlungshärtbares Lacksystem auf Basis eines Polyester-, eines Epoxy- oder Polyurethansystems das einen oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der unterschiedlichen Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Das so mit einer Oberflächenstruktur versehene Trägersubstrat wird anschließend mit einer oder mehreren reflektierenden Schicht(en), beispielsweise metallischen Schichten, beispielsweise aus Al, Cu, Fe, Ag, Au, Cr, Ni, Zn, Sn, Oxiden oder Sulfiden von Metallen, wie TiO₂ ZnS, oder Metalllegierungen und dergleichen versehen.

Dabei kann die Aufbringung der metallischen Schicht entweder selektiv, überlappend oder deckungsgleich mit der Oberflächenstruktur oder auch nur in jenen Bereichen, die bei selektivem Aufbringen der Struktur ausgespart wurden, erfolgen. Es kann auch eine vollflächige Beschichtung vorgenommen werden.

Die die Verklebung der optisch aktiven Schicht mit dem Trägersubstrat bewirkende Schicht ist aus mehreren Schichten zusammengesetzt. Sie beinhaltet eine erste Schicht, eine Schutzschicht und eine dritte Schicht, wobei die Schichtkombination je nach Substrat oder Anforderung an den Sicherheitsstatus variiert werden kann.

Die erste Schicht, die vorzugsweise der reflektierenden Schicht zugewandt ist, fungiert als Absorberschicht für migrierende Bestandteile, beispielsweise reaktive Bestandteile, Katalysatoren und dergleichen. Diese Absorberschicht besteht aus einer Beschichtung von in einem Lösungsmittel oder in Wasser gelösten Vinylco- oder -terpolymeren oder Acrylaten, die reaktive Gruppen aufweisen, die nicht oder nur teilvernetzt sind.
Geeignete Vinylcopolymere sind z.B. durch Polymerisationen aus modifizierten Styrol und modifizierter Acrylsäure, Methylmethacrylat, Vinylchlorid, Vinylidenchlorid, Butadien, Maleinsäureanhydrid, Acrylnitril, Vinylacetat und Vinylalkohol hergestellte Polymere

Geeignete Vinylterpolymere sind z.B. Dreier Kombinationen aus Styrol, Acrylsäure, Methylmethacrylat, Vinylchlorid, Vinylidenchlorid, Butadien, Maleinsäureanhydrid, Acrylnitril, Vinylacetat sowie Vinylalkohol.

Als Acrylate kommen z.B. modifizierte Poly(acrylsäureester) auf Basis Methyl-, Ethyl- und Butylester in Frage.

Als reaktive Gruppen sind Hydroxylgruppen, Aminogruppen, Epoxidgruppen oder Carboxylatgruppen vorhanden, die katalytisch bzw. autokatalytisch wirken können.
Als Lösungsmittel kommen beispielsweise Alkohole, Ester, Ketone oder Aromate in Frage.

Diese Schicht weist eine Dicke von etwa 0,2 bis 10 µm, vorzugsweise 0,5 bis 3 µm in trockenem Zustand auf.

Eine zweite Schicht fungiert als Schutzschicht gegen chemische, mechanische und physikalische Einwirkungen, sowie als Barriereschicht. Gemeinsam mit der ebenfalls als Barriereschicht wirkenden strahlungshärtbaren Lackschicht ergibt sich ein Schichtaufbau, der von beiden Seiten gegen äußere Einflüsse geschützt ist.

Diese Schutzschicht besteht aus einer vernetzten Lackschicht auf Basis von Vinylco- oder -terpolymeren oder Acrylaten. Die reaktiven Gruppen sind dabei Hydroxylgruppen, Aminogruppen, Epoxidgruppen oder Carboxylatgruppen und sind durch Zusatz von Aminen und/oder aromatischen oder aliphatischen Isocyanaten vernetzt.

Die Dicke der Schutzschicht beträgt je nach angestrebter Schutzwirkung 0,2 bis 10 µm.

Auf die Schutzschicht ist gegebenenfalls eine dritte Schicht aufgebracht.
Diese dritte Schicht ist vorzugsweise aus lösungsmittelbasierten vernetzten Vinylco- oder -terpolymeren oder Acrylaten oder aus Polyester aufgebaut.

Sie bildet eine Haftvermittlerschicht zwischen den Schichten des Aufbaus oder zur Klebeschicht und wirkt als zusätzliche Barriereschicht oder aktivierbare Schicht oder als Speicherschicht für Katalysatoren und dergleichen.

Als Klebebeschichtung kommen vorzugsweise Heißsiegelklebebeschichtungen aus wässrigen Ethylenacrylatcopolymeren in Frage.
Es können aber auch alle anderen bekannten Heißsiegelklebebeschichtungen verwendet werden, beispielsweise lösemittelbasierte oder strahlungshärtende Beschichtungen.
Ebenso ist es möglich Selbstklebebeschichtungen oder Kaltsiegelklebebeschichtungen aufzubringen.

Die vernetzte Schutzschicht ist also zwischen Absorberschicht und Primerschicht eingebettet.

Überschüssige Vernetzungskomponenten aus der Schutzschicht, die nicht vernetzt werden, können in die erste bzw. die dritte Schicht migrieren bzw. in die Primerschicht migrieren und werden dort kontrolliert eingebaut.

Dadurch wird zusätzlich die chemische, physikalische und mechanische Beständigkeit des gesamten Aufbaus deutlich verbessert.

Die erfindungsgemäßen Sicherheitsmerkmale werden gegebenenfalls nach entsprechender Konfektionierung (beispielsweise zu Fäden, Bändern Streifen, Patches oder anderen Formaten) daher als Sicherheitselemente in und auf Datenträgern, insbesondere Wertdokumenten wie Ausweisen, Karten, Banknoten oder Etiketten, Siegeln und dergleichen, aber auch in Verpackungsmaterial für sensible Güter, wie Pharmazeutika, Kosmetika, Datenträger, elektronische Bauteile und dergleichen verwendet.

### Beispiele:

### Standard Aufbau: AI/PU(Primer)/ Ethylenacrylatcopolymer (Heißsiegellack)

Aufbau mit modifizierten Schichten:
Vinylacetatcopolymer/Styrolacrylat/Polyester/Ethylenacrylatcopolymer

| Standard Aufbau (ohne modifizierte Schichten) | | mit modif. Schichten |
|---|---|---|
| HCl 5wt-% | 2 | 4 |
| NaOH 5 wt-% | 0 | 4 |
| Ethylacetat | 2 | 4 |
| Trichlorethylen | 1 | 4 |
| Waschmaschine 95°C | 0 | 2 |
| Heißluft | 1 | 4 |

### Beurteilung nach:

4...Keine sichtbare Veränderung
3...Kleine Veränderung
2...Mittlere Veränderung (= 50% der Fläche)
1...Starke Veränderung (> 50% der Fläche)
0...Element verschwunden

## Patentansprüche

1. Sicherheitselement aufweisend ein Trägersubstrat, eine geprägte optisch aktive Struktur, eine reflektierende Schicht und eine Schicht, die ein Verkleben mit einem Substrat erlaubt, **dadurch gekennzeichnet, dass** die Schicht, die die Verklebung mit dem Substrat erlaubt, aus 3 oder mehreren Schichten besteht, wobei die erste Schicht eine Absorptionsschicht, die zweite Schicht eine vernetzte Schutz- bzw. Barriereschicht und die dritte Schicht eine Haftvermittlerschicht darstellt.

2. Sicherheitselement nach Anspruch 1, **dadurch gekennzeichnet, dass** die erste Schicht aus einer Beschichtung von in einem Lösungsmittel oder in Wasser gelösten Vinylco- oder -terpolymeren oder Acrylaten, die reaktive Gruppen aufweisen, die nicht oder nur teilvemetzt vernetzt sind, besteht.

3. Sicherheitselement nach einem der Ansprüche 1 bis 2, **dadurch gekennzeichnet, dass** die Schutzschicht, aus einer mit Aminen und/ oder aliphatischen oder aromatischen Isocyanaten vernetzten Beschichtung aus Vinylco- oder -terpolymeren oder Acrylaten, die reaktive Gruppen aufweisen, besteht.

4. Sicherheitselement nach einem der Ansprüche 1 bis 3, **dadurch gekennzeichnet, dass** die dritte Schicht aus vernetzten Vinylco- oder - terpolymeren, Acrylaten oder Polyester aufgebaut ist.

5. Verwendung des Sicherheitselements nach einem der Ansprüche 1 bis 4 in und auf Datenträgern, insbesondere Wertdokumenten wie Ausweisen, Karten, Banknoten oder Etiketten, Siegeln und dergleichen, aber auch in Verpackungsmaterial für sensible Güter, wie Pharmazeutika, Kosmetika, Datenträger, elektronische Bauteile und dergleichen.

## Claims

1. Security element comprising a backing substrate, an embossed optically active structure, a reflecting layer and a layer which permits adhesive bonding to a substrate, **characterized in that** the layer which permits the adhesive bonding to the substrate consists of three or more layers, where the first layer represents an absorption layer, the second layer represents a crosslinked protective and/or barrier layer and the third layer represents an adhesion promoter layer.

2. Security element according to Claim 1, **characterized in that** the first layer consists of a coating of a solvent or water solution of vinyl copolymers or vinyl terpolymers or acrylates which contain reactive groups which are not crosslinked or are only partly crosslinked.

3. Security element according to either of Claims 1 and 2, **characterized in that** the protective layer consists of an amine- and/or aliphatic or aromatic isocyanate-crosslinked coating of vinyl copolymers or vinyl terpolymers or acrylates which contain reactive groups.

4. Security element according to any of Claims 1 to 3, **characterized in that** the third layer is constructed of crosslinked vinyl copolymers or vinyl terpolymers, acrylates or polyester.

5. Use of the security element according to any of Claims 1 to 4 in and on data carriers, more particularly documents of value such as identity documents, cards, bank notes or labels, seals and the like, but also in packaging material for sensitive products, such as pharmaceuticals, cosmetics, data carriers, electronic components and the like.

## Revendications

1. Élément de sécurité présentant un substrat de support, une structure active optiquement marquée, une couche réfléchissante et une couche qui permet un collage avec un substrat, **caractérisé en ce que** la couche qui permet le collage avec le substrat, consiste en trois ou plusieurs couches, la première couche étant une couche d'absorption, la deuxième couche, une couche de protection ou de barrière réticulée et la troisième couche, une couche adhésive.

2. Élément de sécurité selon la revendication 1, **caractérisé en ce que** la première couche consiste en un revêtement de co- ou terpolymères vinyliques ou acrylates dissous dans un solvant ou dans l'eau, qui présentent des groupes réactifs qui ne sont pas ou sont seulement partiellement réticulés.

3. Élément de sécurité selon l'une des revendications 1 à 2, **caractérisé en ce que** la couche protectrice est constituée d'un revêtement réticulé avec des amines et/ou des isocyanates aliphatiques ou aromatiques de co- ou terpolymères vinyliques ou acrylates qui présentent des groupes réactifs.

4. Élément de sécurité selon l'une des revendications 1 à 3, **caractérisé en ce que** la troisième couche est constituée de co- ou terpolymères vinyliques réticulés, d'acrylates ou de polyesters réticulés.

5. Utilisation de l'élément de sécurité selon l'une des revendications 1 à 4, dans et sur des supports de données, en particulier des documents de valeur tels que documents d'identité, cartes, billets de banque ou étiquettes, sceaux et similaires, mais également dans les matériaux d'emballages de marchandises sensibles telles que les produits pharmaceutiques, les cosmétiques, les supports de données, les éléments électroniques et similaires.
